# EUROPEAN PATENT APPLICATION

(11) **EP 4 736 677 A1**
(43) Date of publication of application: **06.05.2026**
(21) Application number: 23943663.7
(22) Date of filing: 29.06.2023
(51) Int. Cl.: A24F 40/40

(54) **AEROSOL GENERATION DEVICE AND POWER SUPPLY UNIT FOR AEROSOL GENERATION DEVICE**

(71) Applicant: Japan Tobacco Inc., Tokyo 105-6927 (JP)
(72) Inventor: AOYAMA, Tatsunari, Tokyo 130-8603 (JP); MINATO, Junji, Tokyo 130-8603 (JP); UCHIBORI, Tomoya, Tokyo 130-8603 (JP)
(74) Representative: Hoffmann Eitle
(86) International application number: PCT/JP2023/024186
(87) International publication number: WO 2025/004268

(57) **Abstract**

This aerosol generation device comprises: a heating unit that heats a substrate which includes an aerosol source; a control unit that controls the heating carried out by the heating unit; a power supply unit that supplies power-supply power to the control unit; and an output unit that outputs a low signal to the control unit through a connection signal line if there is connection with an external device. The power supply unit is connected to the connection signal line via a resistor.

## Description

### TECHNICAL FIELD

The present disclosure relates to an aerosol generation device and a power supply unit for an aerosol generation device.

### BACKGROUND ART

PTL 1 describes a method for controlling a USB controller, the method including a step for detecting a level change in an ID pin of a USB socket via a GPIO, the GPIO being connected to the ID pin and being used for detection, and a step for controlling the USB controller to turn on when it is determined that the ID pin of the USB socket has changed from a high level to a low level.

PTL 2 describes a USB device suitable for interconnection with a USB host having a D bus that is coupled to ground via a pull-down resistor, the USB device including a microcontroller that has a first port and a second port, and the first port being coupled to a voltage source via a resistor, and a switch that is operated by the microcontroller via the second port to selectively interconnect the first port with the bus of the USB host.

PTL 3 describes an interface identification circuit in which: a first detection module is used to acquire a first voltage in accordance with a VBUS pin voltage of a USB interface and output the first voltage to a control module; the first voltage is used to indicate whether the VBUS pin voltage of the USB interface is at a high level or a low level; and the control module is used to determine the connection state of the USB interface in accordance with the first voltage, and output a prompt message if it is determined that the connection state of the USB interface is a connection to a main device.

### CITATION LIST

### PATENT LITERATURE

PTL 1 CN 109766288 A
PTL 2 EP 2687993 A1
PTL 3 CN 213402973 U

### SUMMARY OF INVENTION

### TECHNICAL PROBLEM

If the control portion is connected to an external device and a high signal is output to the control portion when power-supply power is not being supplied to the control portion, the control portion may malfunction.

The objective of the present disclosure is to reduce the possibility of the control portion malfunctioning if the control portion is connected to an external device and a high signal is output to the control portion when power-supply power is not being supplied to the control portion.

### SOLUTION TO PROBLEM

The present disclosure provides an aerosol generation device comprising a heating portion that heats a substrate containing an aerosol source, a control portion that controls the heating performed by the heating portion, a power supply portion that supplies power-supply power to the control portion, and an output portion that outputs a low signal to the control portion via a connection signal line when there is a connection to an external device, wherein the power supply portion is connected to the connection signal line via a resistance.

The present disclosure also provides a power supply unit for an aerosol generation device, the power supply unit comprising a control portion that controls heating of a substrate containing an aerosol source, a power supply portion that supplies power-supply power to the control portion, and an output portion that outputs a low signal to the control portion via a connection signal line when there is a connection to an external device, wherein the power supply portion is connected to the connection signal line via a resistance.

### ADVANTAGEOUS EFFECTS OF INVENTION

According to the present disclosure, it is possible to reduce the possibility of the control portion malfunctioning if the control portion is connected to an external device and a high signal is output to the control portion when power-supply power is not being supplied to the control portion.

### BRIEF DESCRIPTION OF DRAWINGS

Fig. 1 is a diagram in which a front face side of an aerosol generation device is viewed from diagonally above.
Fig. 2 is a diagram in which the front face side of the aerosol generation device is viewed from diagonally below.
Fig. 3 is a diagram in which a main body device with a front panel removed is viewed from the front.
Fig. 4 shows an example of an internal configuration of the main body device that appears when the front panel is removed.
Fig. 5 is a diagram illustrating the schematic configuration of an electronic circuit of the main body device.

### DESCRIPTION OF EMBODIMENTS

Embodiments relating to the present disclosure will now be described with reference to the drawings. In the drawings, identical parts are indicated by identical reference signs.

### <<Terms>>

An aerosol generation device according to each embodiment is a form of electronic cigarette.
In the following description, a substance generated by the aerosol generation device will be referred to as an aerosol. An aerosol refers to a mixture of minute liquid or solid particles suspended in a gas, and air or another gas.
The embodiments describe aerosol generation devices which generate the aerosol without associated burning.
Moreover, inhalation of the aerosol generated by the aerosol generation device will also be referred to as a "puff".
In each embodiment, an aerosol generation device to which it is possible to attach a solid aerosol source is described. It should be noted that a container accommodating the solid aerosol source is also referred to as a "capsule" or a "stick-type substrate" depending on the product format. Capsules and stick-type substrates are consumables. Capsules and stick-type substrates therefore have fixed criteria for replacement.

### <<Embodiment 1>>

### <Example of External Appearance>

An example of the external appearance of an aerosol generation device used in embodiment 1 will first be described.

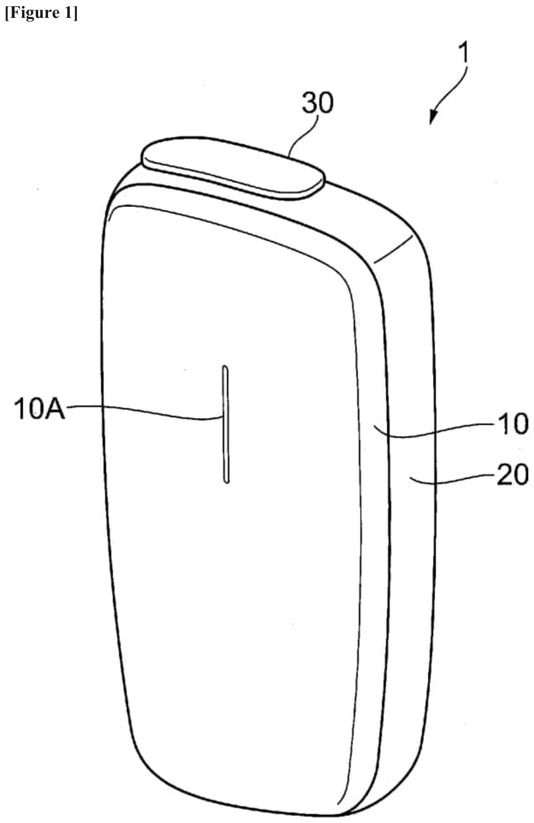

Fig. 1 is a diagram in which a front face side of an aerosol generation device 1 is viewed from diagonally above.

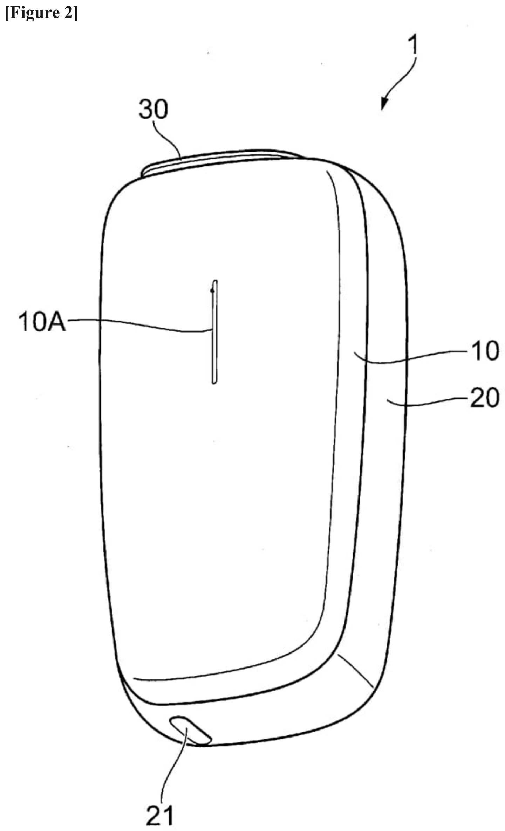

Fig. 2 is a diagram in which the front face side of the aerosol generation device 1 is viewed from diagonally below.

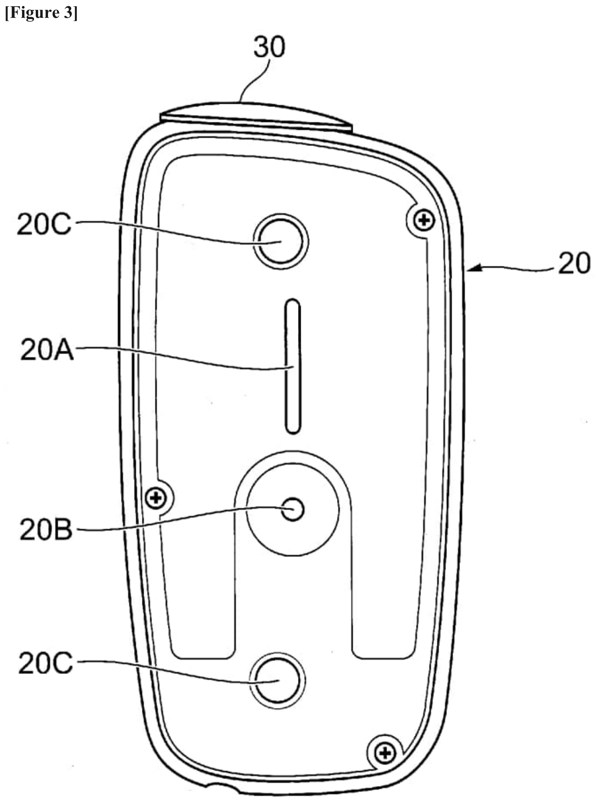

Fig. 3 is a diagram in which a main body device 20 with a front panel 10 removed is viewed from the front.

The aerosol generation device 1 of the present embodiment is sized to be capable of being held by a user in a single hand. The aerosol generation device 1 comprises a main body device 20, a front panel 10 which is mounted on the front of the main body device 20, and a shutter 30 which is disposed on an upper face of the main body device 20 and is capable of sliding along the upper face.
The front panel 10 is a member that can attached to and detached from the main device body 20. Attachment and detachment of the front panel 10 is performed by the user.

The front panel 10 attached to the main body device 20 covers a front face part of the main body device 20, as shown in fig. 1 and fig. 2. In other words, parts of the main body device 20 other than the front face part can also be seen from the outside after the front panel 10 has been attached. For example, side faces, a back face, an upper face, and a bottom face of the main body device 20 can also be seen from the outside after the front panel 10 has been attached.

The front panel 10 is provided with a window 10A. The window 10A is provided in a position facing a light emitting element on the main body device 20 side. In embodiment 1, LEDs (=Light Emitting Diode) 20A are used as the light emitting element. In embodiment 1, eight LEDs 20A are provided in the main device 20.
The window 10A in embodiment 1 is formed by a light-transmissive material. However, the window 10A may equally be a slit that penetrates from a front surface to a rear surface.

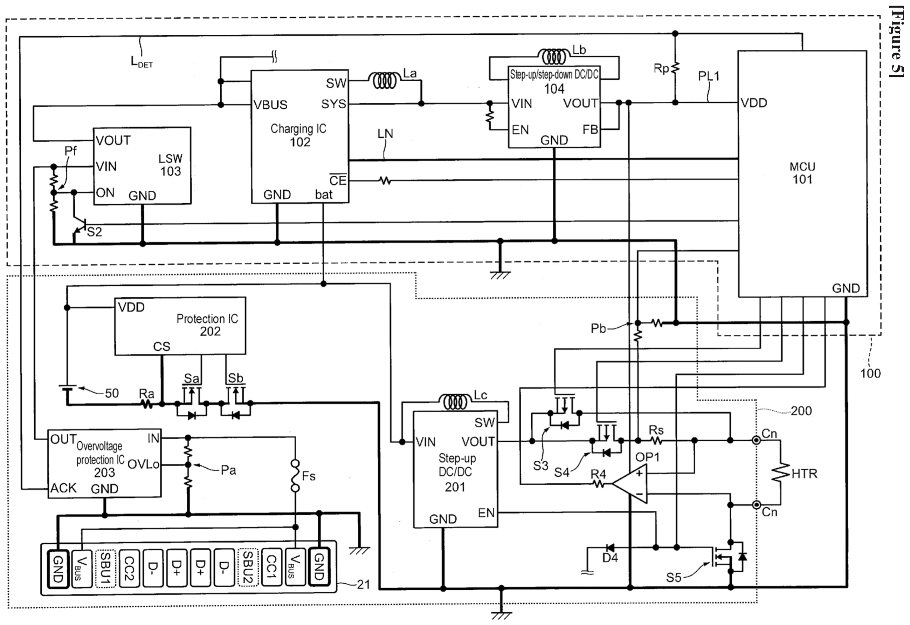

States of operation of the aerosol generation device are assigned to patterns of illumination or blinking of the LEDs 20A. For example, states associated with heating of the aerosol source are assigned to illumination or blinking of the LEDs 20A. States associated with heating of the aerosol source include, for example, completion of preparation for heating of the aerosol source, start of heating, completion or termination of heating, number of aerosol sources available for inhalation, remaining time available for inhalation, and abnormality in the main body temperature. In addition, the occurrence of a failure or malfunction of the main body device 20, remaining battery capacity, charging or completion of charging, or pairing status, for example, are assigned to illumination or blinking of the LEDs 20A. Malfunctions as referred to here also include abnormalities relating to the ambient temperature. Illumination and blinking of the light emitting element are controlled by an MCU 101 (see fig. 5), discussed hereinafter.

The front panel 10 also has the role of a buffer against the propagation of heat released from the main body device 20, etc. In the case of the present embodiment, the generation of aerosol is permitted only when the front panel 10 is attached to the main body device 20.
The front panel 10 used in the present embodiment deforms when a position below the window 10A is pressed by the user's fingertip, and the original shape is restored when the user stops pressing. This deformation allows a power button 20B provided in the main body device 20 to be operated while the front panel 10 remains attached to the main body device 20.

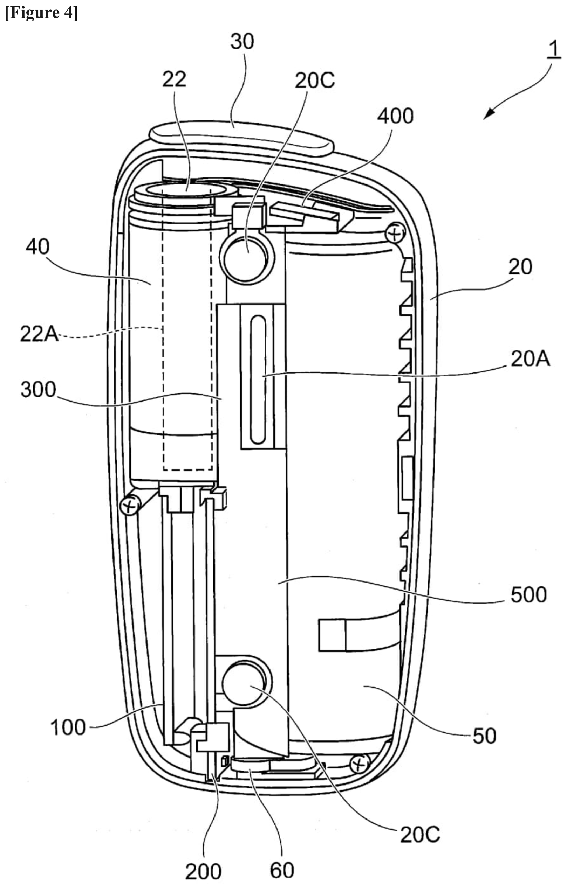

A type C USB (= Universal Serial Bus) connector 21 is provided on the bottom face side of the main body device 20. The shape and type of the USB connector 21 are given by way of example. In embodiment 1, the USB connector 21 is used for charging a battery 50 (see fig. 4) built into the main body device 20. Furthermore, a USB is also merely an example. A receptacle and plug that are compliant with another standard may be used, but the following description will be given taking a case in which a USB connector 21 and a USB plug are used as an example.

An insertion hole 22 (see fig. 4) for insertion of a stick-type substrate accommodating an aerosol source is provided in an upper face portion of the main body device 20. The insertion hole 22 is exposed by sliding the shutter 30 to an open position, and is hidden by sliding the shutter 30 to a closed position.
The stick-type substrate used in the present embodiment has a structure in which a solid aerosol source is accommodated in a substantially cylindrical paper tube.

A magnet, for example, is attached to a rear face of the shutter 30. Meanwhile, a Hall IC is attached to the main body device 20 in a movable range of the shutter 30.
The Hall IC is a magnetic sensor formed by a Hall element and an operational amplifier, etc., and outputs a voltage corresponding to the intensity of a magnetic field passing across the Hall element.
In the present embodiment, opening and closing of the shutter 30 is sensed from a change in the voltage output from the Hall IC accompanying sliding of the shutter 30. That is to say, it is sensed whether the shutter 30 is at the closed position or the open position.

As shown in fig. 4, the power button 20B is disposed substantially in the center of the front face of the main body device 20. As discussed hereinabove, the power button 20B can be operated while the front panel 10 remains attached.
The power button 20B is used, for example, for turning the power supply of the main body device on and off, for turning the power supply to a heater unit 40 (see fig. 4) that heats the aerosol source on and off, and for Bluetooth (registered trademark) pairing commands, etc.
Moreover, a reset function is performed by a long press (e.g., a press of 5 seconds or more) on the power button 20B while the front panel 10 is removed from the main body device 20.
BLE (= Bluetooth low energy) is used as Bluetooth in the present embodiment.

As shown in fig. 3, magnets 20C used for attaching the front panel 10 are disposed on the upper portion and lower portion of the front face of the main body device 20. The magnets 20C are provided in positions facing magnets (not shown) provided on the inner side of the front panel 10. If the magnets on the front panel 10 are N poles, for example, the magnets 20C on the main body device 20 side are S poles. The front panel 10 is detachably attached to the main body device 20 by the force of attraction of the magnets.

It should be noted that either the magnets on the front panel 10 side or the magnets 20C on the main body device 20 side may be metal pieces made of iron or another magnetic metal. Incidentally, attachment of the front panel 10 to the main body device 20 is sensed by means of the Hall IC provided on the main body device 20 side.
Various other types of electronic components required for generating an aerosol are built into the main body device 20. In embodiment 1, a device configuration in which the front panel 10 is attached to the main body device 20 has been described as the aerosol generation device 1, but in a narrow sense, the main body device 20 is referred to as an aerosol generation device.

### <Internal Configuration Example>

Fig. 4 shows an example of the internal configuration of the main body device 20 that appears when the front panel 10 is removed.

Within the main body device 20 in embodiment 1 are provided the heater unit 40, the battery 50, an MCU (= Micro Control Unit) board 100, a USB connector board 200, an LED board 300, a Hall IC board 400, a vibrator 60 and a chassis 500 to which these members are attached. That is, four separate boards are provided within the main body device 20. The four boards are spaced apart from each other.

The heater unit 40 is a unit for heating a stick-type substrate inserted into the insertion hole 22. The insertion hole 22 is defined as a space surrounded by an inner wall of a cylindrical container 22A.
The container 22A used in embodiment 1 has a bottom. However, a container 22A without a bottom may equally be used.
In the case of the container 22A used in embodiment 1, a flat portion is provided on a side wall thereof. In other words, a flat portion is provided in a cross-section when the container 22A is cut along in a plane perpendicular to the axis of the container 22A.

The flat portion compresses and deforms the side face of the stick-shaped substrate inserted into the opening of the insertion hole 22, thereby improving heating efficiency. It should be noted that the cross-sectional shape may be substantially circular, substantially elliptical, or substantially polygonal. Further, the cross-sectional shape may be the same from the opening side to the bottom surface, or may vary from the opening side to the bottom surface.

The container 22A is preferably made of a metal having a high thermal conductivity. In the case of embodiment 1, the container 22A is made of stainless steel, for example.
A film-like heater HTR (see fig. 5) is disposed on the outer periphery of the container 22A to cover the outer peripheral surface. The heater HTR generates heat by consuming power supplied from the battery 50. When the heater HTR generates heat, the stick-shaped substrate is heated from the outer periphery, and an aerosol is generated.

The heater unit 40 is connected to a heater connector Cn (see fig. 5) provided on the USB connector board 200 and receives supplied power.
The heater unit 40 is an example of a heating portion that heats a substrate containing an aerosol source.

The battery 50 is a power source that supplies power required for the operation of circuit units built into the main body device 20. In embodiment 1, a lithium ion secondary battery or the like that can be repeatedly charged is used as the battery 50. Power from the battery 50 is supplied to each part through power supply lines that are connected to a negative electrode and a positive electrode, which are not shown.

The MCU board 100 is a board on which the MCU 101, which controls the operation of the entire device, and the like are mounted. The MCU 101 is what is known as a controller. The operation of the MCU 101 is defined through the execution of the firmware or a program running on the firmware. In particular, the MCU 101 controls the heating performed by the heater unit 40.
The MCU 101 is an example of a control portion that controls the heating performed by the heating portion.

The USB connector board 200 is a board on which the USB connector 21 is mounted. The USB connector 21 in the present embodiment is used to receive a supply of power from an external power source via a USB cable. Furthermore, the heater connector Cn and the like are also mounted on the USB connector board 200. The heater connector Cn is used to supply power to the heater unit 40.

The LED board 300 is a board on which the LEDs 20A are mounted. The LEDs 20A are arranged in a row on the LED board 300. The number of LEDs 20A in the embodiment 1 is eight, but the number of LEDs 20A is not shown explicitly in fig. 4. Moreover, the number of LEDs 20A and the arrangement thereof on the LED board 300 can be changed as desired.
The Hall IC board 400 is a board on which the Hall IC that senses the opening and closing of the shutter 30 is mounted.
The vibrator 60 is a device that vibrates to notify the user of various information relating to the aerosol generation device 1 via the case of the main device 20.

### <Outline of Electronic Circuit>

Fig. 5 is a diagram illustrating the schematic configuration of the electronic circuit of the main body device 20. It should be noted that in fig. 5, only the main electronic components of the MCU board 100 and the USB connector board 200 are depicted, and depictions of the LED board 300 and the Hall IC board 400 are omitted.

The wiring shown with thick solid lines in fig. 5 is wiring (wiring connected to the ground provided in the main body device 20) that has the same potential as a reference potential (ground potential) of the main body device 20, and will be referred to below as ground lines. In fig. 5, electronic components in which a plurality of circuit elements are arranged in the form of a chip are shown as rectangles, and the reference signs of various terminals are depicted inside the rectangle. The power supply terminal VCC and the power supply terminal VDD mounted on the chips each indicate high potential side power supply terminals. The power supply terminal VSS and the ground terminal GND mounted on the chips each indicate low potential side (reference potential side) power supply terminals. In the electronic components formed as chips, the difference between the potential of the high potential side power supply terminal and the potential of the low potential side power supply terminal is the power supply voltage. The electronic components formed as chips use the power supply voltage to perform various functions.

The MCU board 100 comprises: the MCU 101 for controlling the entire aerosol generation device 1; a charging IC 102 for controlling the charging of the battery 50; a load switch (hereinafter referred to as LSW) 103 consisting of a combination of capacitors, resistors, transistors, etc.; and a step-up/step-down DC/DC converter 104 (shown in the drawing as "step-up/step-down DC/DC 104").

The ground terminals GND of each of the charging IC 102, the LSW 103 and the step-up/step-down DC/DC converter 104 are connected to the ground lines.

The USB connector board 200 is provided, as main electronic components, with: a power supply connector which is electrically connected to the battery 50 (in the drawing, the battery 50 connected to the power supply connector is shown); a step-up DC/DC converter 201 (shown as "step-up DC/DC 201" in the drawing); a protection IC 202; an overvoltage protection IC 203; the USB connector 21; switches S3 to S5 formed using MOSFETs; an operational amplifier OP1; and a pair of (positive electrode side and negative electrode side) heater connectors Cn which are electrically connected to the heater HTR.

The two ground terminals GND of the USB connector 21, the ground terminal GND of the step-up DC/DC converter 201, the ground terminal GND of the overvoltage protection IC 203, and the negative power supply terminal of the operational amplifier OP1 are each connected to a ground line.

### <Details of Electronic Circuit>

The connection relationships, etc., between the electronic components will be described below with reference to fig. 5.

The two power supply input terminals V_{BUS} of the USB connector 21 are connected to the input terminal IN of the overvoltage protection IC 203 via a protective element such as a fuse Fs. When a USB plug is connected to the USB connector 21 and a USB cable including the USB plug is connected to an external power supply, a USB voltage V_{USB} is supplied to the two power supply input terminals V_{BUS} of the USB connector 21.

The input terminal IN of the overvoltage protection IC 203 is connected to one end of a voltage dividing circuit Pa comprising a series circuit of two resistors. The other end of the voltage dividing circuit Pa is connected to the ground line. The connection point of the two resistors that constitute the voltage dividing circuit Pa is connected to a voltage detection terminal OVLo of the overvoltage protection IC 203. When the voltage input to the voltage detection terminal OVLo is less than a threshold, the overvoltage protection IC 203 outputs the voltage input to the input terminal IN from the output terminal OUT. When the voltage input to the voltage detection terminal OVLo exceeds the threshold (overvoltage), the overvoltage protection IC 203 stops the voltage output from the output terminal OUT (disconnects the electrical connection between the LSW 103 and the USB connector 21), thereby protecting the electronic components downstream of the overvoltage protection IC 203. The output terminal OUT of the overvoltage protection IC 203 is connected to the input terminal VIN of the LSW 103.

The input terminal VIN of the LSW 103 is connected to one end of a voltage dividing circuit Pf comprising a series circuit of two resistors. The other end of the voltage dividing circuit Pf is connected to the ground line. The connection point of the two resistors that constitute the voltage dividing circuit Pf is connected to a control terminal ON of the LSW 103. The control terminal ON of the LSW 103 is connected to a collector terminal of a bipolar transistor S2. An emitter terminal of the bipolar transistor S2 is connected to the ground line. A base terminal of the bipolar transistor S2 is connected to the MCU 101. When the level of a signal input to the control terminal ON becomes high, the LSW 103 outputs the voltage input to the input terminal VIN from the output terminal VOUT. The output terminal VOUT of the LSW 103 is connected to the input terminal VBUS of the charging IC 102. The MCU 101 turns on the bipolar transistor S2 while there is no USB connection. As a result, the control terminal ON of the LSW 103 is connected to the ground line via the bipolar transistor S2, and a low-level signal is input to the control terminal ON of the LSW 103.

The bipolar transistor S2 connected to the LSW 103 is turned off by the MCU 101 when a USB connection is made. When the bipolar transistor S2 is turned off, the USB voltage V_{USB} divided by the voltage dividing circuit Pf is input to the control terminal ON of the LSW 103. Therefore, when a USB connection is made and the bipolar transistor S2 is turned off, a high-level signal is input to the control terminal ON of the LSW 103. As a result, the LSW 103 outputs the USB voltage VUSB supplied from the USB cable from the output terminal VOUT. It should be noted that, even if a USB connection is made while the bipolar transistor S2 not turned off, since the control terminal ON of the LSW103 is connected to the ground line via the bipolar transistor S2, a low-level signal continues to be input to the control terminal ON of the LSW 103 unless the MCU 101 turns off the bipolar transistor S2.

The positive terminal of the battery 50 is connected to the power supply terminal VDD of the protection IC 202, the input terminal VIN of the step-up DC/DC converter 201, and the charging terminal bat of the charging IC 102. Therefore, the power supply voltage V_{BAT} of the battery 50 is supplied to the protection IC 202, the charging IC 102, and the step-up DC/DC converter 201. A resistor Ra, a switch Sa formed by a MOSFET, and a switch Sb formed by a MOSFET are connected in series to the negative terminal of the battery 50 in the stated order. A current detection terminal CS of the protection IC 202 is connected to the connection point between the resistor Ra and the switch Sa. The control terminals of the switch Sa and the switch Sb are connected to the protection IC 202.

The protection IC 202 acquires the current value flowing through the resistor Ra when the battery 50 is being charged or discharged from the voltage input to the current detection terminal CS, and if this current value becomes excessively large (in the case of an overcurrent), controls the opening and closing of the switch Sa and the switch Sb to stop the charging or discharging of the battery 50, thereby protecting the battery 50. More specifically, the protection IC 202 stops the charging of the battery 50 by turning off the switch Sb if an excessively large current value is acquired when the battery 50 is being charged. The protection IC 202 stops the discharging of the battery 50 by turning off the switch Sa if an excessively large current value is acquired when the battery 50 is being discharged. In addition, when the voltage value of the battery 50 becomes abnormal (in the case of a charging overcurrent or a discharging overcurrent), on the basis of the voltage input to the power supply terminal VDD, the protection IC 202 controls the opening and closing of the switch Sa and the switch Sb to stop the charging or discharging of the battery 50, thereby protecting the battery 50. More specifically, the protection IC 202 stops the charging of the battery 50 by turning off the switch Sb if a charging overcurrent of the battery 50 is sensed. The protection IC 202 stops the discharging of the battery 50 by turning off the switch Sa if a discharging overcurrent of the battery 50 is sensed.

One end of a reactor Lc is connected to a switching terminal SW of the step-up DC/DC converter 201. The other end of the reactor LC is connected to the input terminal VIN of the step-up DC/DC converter 201. The step-up DC/DC converter 201 performs on/off control of a built-in transistor connected to the switching terminal SW, thereby stepping up the input voltage and outputting it from an output terminal VOUT. It should be noted that the input terminal VIN of the step-up DC/DC converter 201 constitutes the high potential side power supply terminal of the step-up DC/DC converter 201. The step-up DC/DC converter 201 performs the step-up operation when a signal input to an enable terminal EN is at a high level. In the USB connected state, the signal input to the enable terminal EN of the step-up DC/DC converter 201 may be controlled to a low level by the MCU 101. Alternatively, in the USB connected state, it is equally possible for the MCU 101 not to control the signal input to the enable terminal EN of the step-up DC/DC converter 201, thereby making the potential of the enable terminal EN indefinite.

The output terminal VOUT of the step-up DC/DC converter 201 is connected to the source terminal of a switch S4 formed by a P-channel MOSFET. The gate terminal of the switch S4 is connected to the MCU 101. One end of a resistor Rs is connected to the drain terminal of the switch S4. The other end of the resistor Rs is connected to the positive electrode side heater connector Cn, which is connected to one end of the heater HTR. A voltage dividing circuit Pb comprising two resistors is connected to the connection point between the switch S4 and the resistor Rs. The connection point of the two resistors that constitute the voltage dividing circuit Pb is connected to the MCU 101.

The source terminal of a switch S3 formed by a P-channel MOSFET is connected to a connection line between the output terminal VOUT of the step-up DC/DC converter 201 and the source terminal of the switch S4. The gate terminal of the switch S3 is connected to the MCU 101. The drain terminal of the switch S3 is connected to a connection line between the resistor Rs and the positive electrode side heater connector Cn. In this way, a circuit including the switch S3 and a circuit including the switch S4 and the resistor Rs are connected in parallel between the output terminal VOUT of the step-up DC/DC converter 201 and the positive electrode side heater connector Cn. The circuit including the switch S3 does not include a resistor and therefore has a lower resistance than the circuit including the switch S4 and the resistor Rs.

The non-inverting input terminal of the operational amplifier OP1 is connected to the connection line between the resistor Rs and the positive electrode side heater connector Cn. The inverting input terminal of the operational amplifier OP1 is connected to the negative electrode side heater connector Cn, which is connected to the other end of the heater HTR, and to the drain terminal of a switch S5 formed by an N-channel MOSFET. The source terminal of the switch S5 is connected to the ground line. The gate terminal of the switch S5 is connected to the MCU 101, the anode of a diode D4, and the enable terminal EN of the step-up DC/DC converter 201. The cathode of the diode D4 is connected to a flip-flop (not shown) that outputs a low-level signal when the temperature of the heater HTR becomes excessive, for example. One end of a resistor R4 is connected to the output terminal of the operational amplifier OP1. The other end of the resistor R4 is connected to the MCU 101.

The charging IC 102 has a charging function for charging the battery 50 on the basis of the USB voltage V_{USB} input to the input terminal V_{BUS}. The charging IC 102 acquires the charging current and charging voltage of the battery 50 from terminals and wiring (not shown), and controls charging of the battery 50 (controls the supply of power from the charging terminal bat to the battery 50) on the basis of the charging current and charging voltage.

The charging IC 102 additionally has a V_{BAT} power pass function and an OTG function. The V_{BAT} power pass function is a function for outputting, from an output terminal SYS, a system power supply voltage Vcc0 that is substantially equal to the power supply voltage V_{BAT} input to the charging terminal bat. The OTG function is a function for outputting, from the input terminal VBUS, a system power supply voltage Vcc4 that is obtained by stepping up the power supply voltage V_{BAT} input to the charging terminal bat. The OTG function of the charging IC 102 is turned on/off under the control of the MCU 101 by serial communication using a communication line LN. In the OTG function, the power supply voltage V_{BAT} input to the charging terminal bat may be output directly from the input terminal VBUS. In this case, the power supply voltage V_{BAT} and the system power supply voltage Vcc4 are substantially equal. It should be noted that, although serial communication requires multiple signal lines, such as a data line for data transmission and a clock line for synchronization, only one signal line is shown for simplicity.

The output terminal SYS of the charging IC 102 is connected to an input terminal VIN of the step-up/step-down DC/DC converter 104. One end of a reactor La is connected to a switching terminal SW of the charging IC 102. The other end of the reactor La is connected to the output terminal SYS of the charging IC 102. A charge enable terminal CE (̅)̅ of the charge IC 102 is connected to the MCU 101 via a resistor.

A resistor is connected to the input terminal VIN and the enable terminal EN of the step-up/step-down DC/DC converter 104. When the system power supply voltage Vcc0 is input from the output terminal SYS of the charging IC 102 to the input terminal VIN of the step-up/step-down DC/DC converter 104, the level of the signal input to the enable terminal EN of the step-up/step-down DC/DC converter 104 becomes high, and the step-up/step-down DC/DC converter 104 starts a step-up operation or a step-down operation. The step-up/step-down DC/DC converter 104 generates a system power supply voltage Vcc1 by stepping up or stepping down the system power supply voltage Vcc0 input to the input terminal VIN, by performing switching control of a built-in transistor connected to the reactor Lb, and outputs the system power supply voltage Vcc1 from an output terminal VOUT. The output terminal VOUT of the step-up/step-down DC/DC converter 104 is connected to a feedback terminal FB of the step-up/step-down DC/DC converter 104 and to the power supply terminal VDD of the MCU 101. The wiring through which the system power supply voltage Vcc1 output from the output terminal VOUT of the step-up/step-down DC/DC converter 104 is supplied is shown as a power supply line PL1. The positive power supply terminal of the operational amplifier OP1 is connected to the power supply line PL1.
The step-up/step-down DC/DC converter 104 is an example of a power supply portion that supplies power-supply power to the control portion.

Incidentally, if the output terminal OUT of the overvoltage protection IC 203 is connected to the MCU 101, when a USB plug connected to an external device is connected to the USB connector 21, a high-level signal is input to the MCU 101. However, if a high-level signal is input to the MCU101 when the system power supply voltage Vcc1 is not being applied to the MCU101, it is possible that the MCU101 may malfunction, preventing heating control from being performed normally, and causing overheating, etc. Therefore, in embodiment 1, a high-level signal is not input to the MCU 101 when the system power supply voltage Vcc1 is not being applied to the MCU 101.

Specifically, an acknowledge terminal ACK of the overvoltage protection IC 203 is connected to the MCU 101, and a signal from the acknowledge terminal ACK is output to the MCU 101 via a signal line L_{DET}. Here, the output from the acknowledge terminal ACK is open-drain. That is, the output from the acknowledge terminal ACK is connected to ground when at a low level, and is not connected to anything when at a high level. This output is connected to the power supply line PL1 via a resistor Rp, such that the system power supply voltage Vcc1 is applied to the MCU 101 when the output is at a high level. Furthermore, when a USB plug is connected to the USB connector 21, a low level signal is output.

As a result, when the system power supply voltage Vcc1 is not being applied to the MCU 101, even if a USB plug is connected to the USB connector 21, a low-level signal is input to the MCU 101 via the signal line L_{DET}.
Meanwhile, when the system power supply voltage Vcc1 is being applied to the MCU 101, when a USB plug is connected to the USB connector 21, a high-level signal is input to the MCU 101 via the signal line L_{DET}.
According to such a configuration, it is possible to prevent a high-level signal from being input to the MCU 101 when power is not being supplied to the MCU 101, without inserting a switch such as an FET.

In this case, the signal line L_{DET} is an example of a connection signal line, and the overvoltage protection IC 203 is an example of an output portion that outputs a low signal to the control portion via a connection signal line when there is a connection to an external device.
Furthermore, the step-up/step-down DC/DC converter 104 is an example of a power supply portion that is connected to the connection signal line via a resistance.

### <Advantageous Effects>

In the aerosol generating device 1 of the present embodiment, when there is a connection to an external device, a low-level signal is output to the MCU 101 via the signal line LDET, and the step-up/step-down DC/DC converter 104 is connected to the signal line LDET via the resistor Rp. As a result, in the present embodiment, when the system power supply voltage Vcc1 is not being applied to the MCU 101, the possibility of the MCU 101 malfunctioning if there is a connection to an external device and a high signal is output to the MCU 101 when power-supply power is not being supplied to the MCU 101 is reduced.

### <<Other Embodiments>>

(1) Embodiments of the present disclosure were described above, but the technical scope of the present disclosure is not limited to the scope disclosed in the embodiments above. It will be obvious from the disclosure of the claims that the technical scope of the present disclosure also includes various modifications or improvements made to the embodiment above.
(2) The embodiment discussed hereinabove described a case in which the aerosol source is a solid, but the aerosol source may equally be a liquid. When the aerosol source is a liquid, a system is adopted in which the aerosol source is guided to a narrow tube known as a wick by using the capillary phenomenon, and a coil wound around the wick is heated to thereby vaporize the aerosol source.
(3) The embodiment discussed hereinabove described an aerosol generation device which generates an aerosol by heating a solid aerosol source, but the aerosol generation device may equally generate an aerosol by separately heating each of a solid aerosol source and a liquid aerosol source. An aerosol generation device of this type is also referred to as a hybrid aerosol generation device.

### <<Summary>>

It should be noted that the present disclosure includes the following features.
(1) An aerosol generation device comprising a heating portion that heats a substrate containing an aerosol source, a control portion that controls the heating performed by the heating portion, a power supply portion that supplies power-supply power to the control portion, and an output portion that outputs a low signal to the control portion via a connection signal line when there is a connection to an external device, wherein the power supply portion is connected to the connection signal line via a resistance.
(2) A power supply unit for an aerosol generation device, the power supply unit comprising a control portion that controls heating of a substrate containing an aerosol source, a power supply portion that supplies power-supply power to the control portion, and an output portion that outputs a low signal to the control portion via a connection signal line when there is a connection to an external device, wherein the power supply portion is connected to the connection signal line via a resistance.

### REFERENCE SIGNS LIST

1 ... aerosol generation device, 10 ... front panel, 20 ... main body device, 21 ... USB connector, 22 ... insertion hole, 24 ... LED, 30 ... shutter, 40 ... heater unit, 50 ... battery, 60 ... vibrator, 100 ... MCU board, 101 ... MCU, 104 ... step-up/step-down DC/DC converter, 200 ... USB connector board, 203 ... overvoltage protection IC, 300 ... LED board, 400 ... Hall IC board, 500 ... chassis

## Claims

1. An aerosol generation device comprising a heating portion that heats a substrate containing an aerosol source,
a control portion that controls the heating performed by the heating portion,
a power supply portion that supplies power-supply power to the control portion, and
an output portion that outputs a low signal to the control portion via a connection signal line when there is a connection to an external device,
wherein
the power supply portion is connected to the connection signal line via a resistance.

2. A power supply unit for an aerosol generation device, the power supply unit comprising a control portion that controls heating of a substrate containing an aerosol source,
a power supply portion that supplies power-supply power to the control portion, and
an output portion that outputs a low signal to the control portion via a connection signal line when there is a connection to an external device,
wherein
the power supply portion is connected to the connection signal line via a resistance.
